# EUROPEAN PATENT SPECIFICATION

(11) **EP 1 311 159 B1**
(45) Date of publication and mention of the grant of the patent: **28.04.2004**
(21) Application number: 01982955.5
(22) Date of filing: 27.07.2001
(51) Int. Cl.: A01N 43/16, A01N 37/06, A01N 59/26, A01N 65/00, A01N 63/00, A01C 1/06, C05G 1/00, C05G 3/00, C05F 11/00

(54) **AGRICULTURAL COMPOSITION AND METHOD FOR TREATMENT OF PLANTS THEREWITH**
LANDWIRTSCHAFTLICHE ZUSAMMENSETZUNG UND VERFAHREN ZUR PFLANZENBEHANDLUNG MIT DIESER
COMPOSITION AGRICOLE ET METHODE DE TRAITEMENT DE PLANTES L'UTILISANT

(30) Priority: 28.07.2000 NO 20003865
(43) Date of publication of application: 21.05.2003
(73) Proprietor: Algea A.S., 0283 Oslo (NO)
(72) Inventor: NEWTON, Adrian, C., Dundee DD3 6JL (GB); LYON, Gary, D., Invergowrie, Dundee DD2 5JQ (GB); HOLMES, Keith, Uxbridge, Middlesex UB8 2LW (GB); SMITH, Wendy, Dundee DD2 1LH (GB); HANKINS,Simon Derek, Middle Sackville, Nova Scotia B4E 3J8 (CA); OSNES, Knut, Kristian, N-3711 Skien (NO)
(74) Representative: Matthews, Derek Peter
(86) International application number: PCT/NO2001/000322
(87) International publication number: WO 2002/009513

(56) References cited:
- EP-A1- 0 878 129
- WO-A1-99/53761
- FR-A1- 2 803 176
- US-A- 6 083 293
- DATABASE CROPU [Online] LYON G.D. ET AL.: 'Novel disease control compounds: The potential to 'immunize' plants against infection', XP002906859 Retrieved from STN Database accession no. 1995-88902 & PLANT PATHOL. vol. 44, no. 3, 1995, pages 407 - 427
- DATABASE WPI Week 9517, Derwent Publications Ltd., London, GB; AN 1995-126070, XP002906860 & JP 7 048 214 A (MITSUI ENG & SHIPBUILDING CO) 21 February 1995
- DATABASE CROPU [Online] LIZZI Y. ET AL.: 'Seaweeds against mildew: What is the future. (Question). Laboratory results are very encouraging', XP002906861 Retrieved from STN Database accession no. 1998-88367 & PHYTOMA DEF. VEG. no. 508, 1998, pages 29 - 30
- DATABASE CROPU [Online] STEVEN C.M. ET AL.: 'Some properties of a seaweed extract based on ascophyllum nodosum when sprayed, in conjunction with an adjuvant or fungicide, on to a Barley crop infected with erysiphe graminis (cereal mildew)', XP002906862 Retrieved from STN Database accession no. 1994-80365 & J. SCI. FOOD AGRIC. vol. 63, no. 1, 1993, page 128
- DATABASE SCISEARCH [Online] PATIER P. ET AL.: 'Seaweed liquid fertilizer from ascophyllum-nodosum contains elicitors of plant D-glycanases', XP002906863 Retrieved from STN Database accession no. 93:395872 & JOURNAL OF APPLIED PHYCOLOGY vol. 5, no. 3, June 1993, pages 343 - 349

## Description

The present invention relates to an agrochemical composition and a method for protecting plants, enhancing their resistance to infection by pathogens and increasing their tolerance against cold, salinity and drought.

Existing techniques to control plant pathogens are normally dependent on the application to plants of pesticides that have a toxic activity directly on the invading pathogen or on the vector of the pathogen. Thus, agriculture and horticulture are highly dependent on regular spray applications of fungicides to control fungal diseases and insecticides and/or nematicides to control the vectors of viral diseases. There are no pesticides currently available for routine spray application to control bacterial diseases of plants.

The active agent of the agricultural composition according to the present invention does not work in the same way that fungicides, nematicides and insecticides work viz. by directly killing an organism. Rather it relies in part on its ability to stimulate specific signal transduction pathways in plants which are associated with the elicitation of resistance responses. A plant responds to a number of external signals enabling it to 'sense' its environment and to respond in an appropriate manner. Components of the composition according to the invention are designed to stimulate/activate several signal transduction pathways and thereby enhancing and maximizing the potential for the plant to respond to subsequent infection by a potential pathogen. Existing technologies and approaches have used single components to activate plant resistance responses and have placed a high reliance on using synthetic chemicals. Problems have been encountered with existing approaches to stimulate resistance as a practical method of disease control. These problems have included phytotoxicity (yellowing, necrosis, and general plant malaise), lack of significant levels of disease control, and lack of reproducibility/sustainability.

Compositions comprising chitosan and possibly (natural) unsaturated fatty acids, algae extracts, for enhancing resistance to plant diseases without fear of environmental pollution are previously known (ref. EP-878129, FR-2667072, JP-5194605, JP-4360806, WO-8907395 and JP-7048214). However, these known compositions frequently have inadequate efficacy for effective agricultural and horticultural application. From WO-9953761 it is also known to use a phosphorous acid derivate as amplifier of plant defense responses. A broad and simultaneous stimulation of multiple responses in the plant is however not possible.

The main object of the present invention was to provide a new agricultural composition for enhancing resistance to plant diseases avoiding the disadvantages of the prior art, namely to provide robust, broad spectrum protection against plant pathogens without disadvantageous side effects.

Another object was to arrive at an agricultural composition which would increase the abiotic stress tolerance of the plants against factors like cold, salinity and drought.

A further object was to arrive at a practical method for using the agricultural composition and applying it effectively to the plants.

### Summary of the invention

The inventors surprisingly found that application of a composition comprising chitosan, polyunsaturated ω-3 fatty acids, phosphate and seaweed-derived extracts, preferably from *Ascophyllum nodosum,* but not excluding extracts or extract fractions from additional marine macroalgea like *Laminaria spp.* and others, achieves robust, broad spectrum protection against bacterial, fungal and viral plant pathogens without disadvantageous side effects.
1. The agricultural composition according to the invention is based upon natural (non-synthetic) components but incorporating synthetic components in formulation options.
2. Said composition contains several components to maximize the plant's induced resistance response.
3. Said composition is non-phytotoxic and causes no obvious undue side effects regarding yellowing, stunting, necrosis, or any other deleterious effect.
4. The invented composition has not been found to be detrimental to yield.
5. Said composition contains several components designed to work on a wide range of monocotyledon and dicotyledon plant families.
6. The composition is designed to work against a wide range of plant diseases.
7. The composition is designed to be compatible with biocontrol agents like benign fungi and bacteria.
8. The composition of the invention is flexible, and different proportions of the individual components are within the scope of the invention.

The invented agricultural composition comprises all mixtures of the following:
Chitosan, which can have a degree of acetylation between 5 and 40%; poly-unsaturated fatty acids, which can be ω-3 fatty acids (e.g. fish oils, cod liver oil triglyceride etc.); phosphate, preferably K₂HPO₄, KH₂PO₄. It is also preferred that the composition has a pH of about 6. A seaweed-derived extract, preferably from the seaweed *Ascophyllum nodosum,* but not excluding extracts or extract fractions from additional marine macroalgea like *Laminaria spp*. and others, is included for both enhanced disease control and improved plant nutrition. These formulations are abbreviated to: COP or COPS (with seaweed-derived extract).

A wide range of adjuvants enhance the efficacy of the formulation specified above. Examples of useful adjuvants are:
Agral (a non-ionic surfactant form Zeneca Crop Protection, Bracknell, England), Silwet (Polyalkyleneoxide Modified Heptamethyltrisiloxane), Bond, LI-700 (penetrant, non-ionic surfactant wetter made from soybean lecithin and organic acid, Newman Agrochemicals Ltd., Cambridge, England), and Seapower (surfactant: Natural Marine Resources Ltd., Kenilworth, Warwickshire, England).
The effects of adjuvants alone and in combination with COP shown as percentage reduction in mildew achieved by each treatment in comparison to the untreated control on whole barley plants are shown in Table 1.

**Table 1**

| Treat | % control of 1st leaf | | % control on whole plant | |
|---|---|---|---|---|
| | 1 day | 2 day | 1 day | 2 day |
| No treatment | 0.00 | 0.00 | 0.00 | 0.00 |
| Agral (0.02%) | 27.48 | 23.59 | 5.47 | 20.49 |
| Silwet(0.1%) | 51.87 | 18.82 | 39.72 | 1.52 |
| Bond (0.1%) | 7.61 | -10.63 | 23.60 | -13.37 |
| Li-700 (0.5%) | 11.28 | 0.51 | 22.02 | 0.12 |
| Seapower (0.02%) | 4.72 | 24.45 | 2.01 | 26.08 |
| Ag (0.02%) + COP | 96.33 | 93.60 | 92.76 | 67.78 |
| Sil (0.1%) + COP | 99.80 | 99.65 | 95.86 | 74.16 |
| Bo (0.1 %) + COP | 88.13 | 87.33 | 83.52 | 73.86 |
| Li (0.5%) + COP | 97.77 | 86.53 | 93.37 | 66.99 |
| Sea (0.02%) + COP | 84.46 | 86.98 | 83.70 | 59.78 |

Summary of percentage reduction in mildew achieved by combination of adjuvants and COP (chitosan 1.5 mg/ml, oil 1% and phosphate 100 mM) on whole barley plants inoculated 1 and 5 days after spraying. Level of control is illustrated for 1^{st} leaf and for the whole plant as percentage compared to untreated control plants.

This invention is related to enhancing the resistance of all monocotyledonous and dicotyledonous plants as demonstrated on barley, wheat, tomato, cucumber and lettuce.

The agricultural composition according to the invention can be applied to the leaves and roots of the plants by spraying, drenching, soaking, seed-coating, dipping and via fertigation systems.

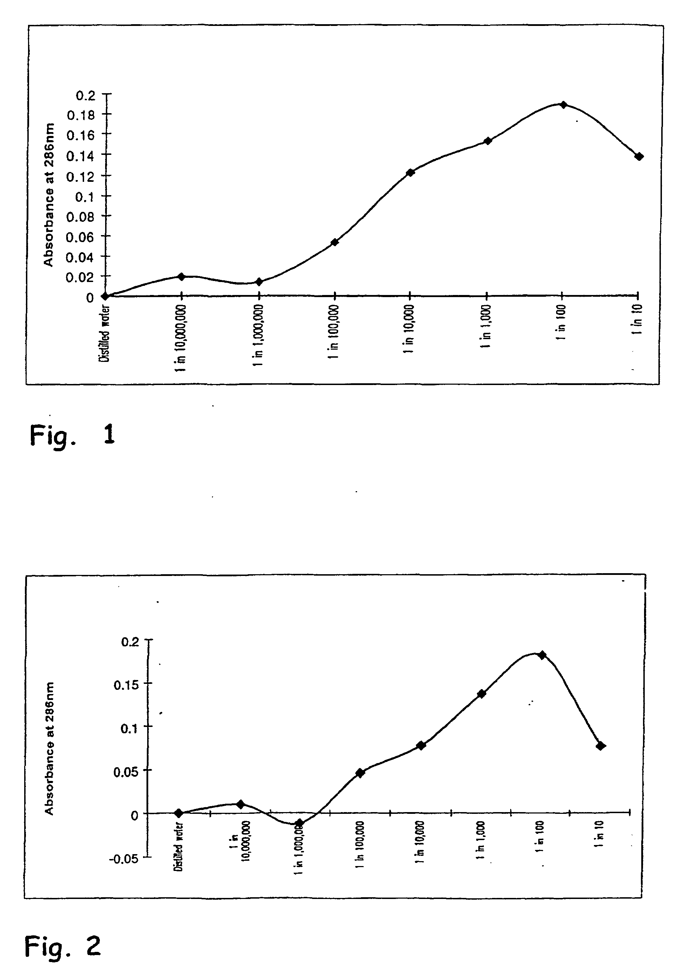

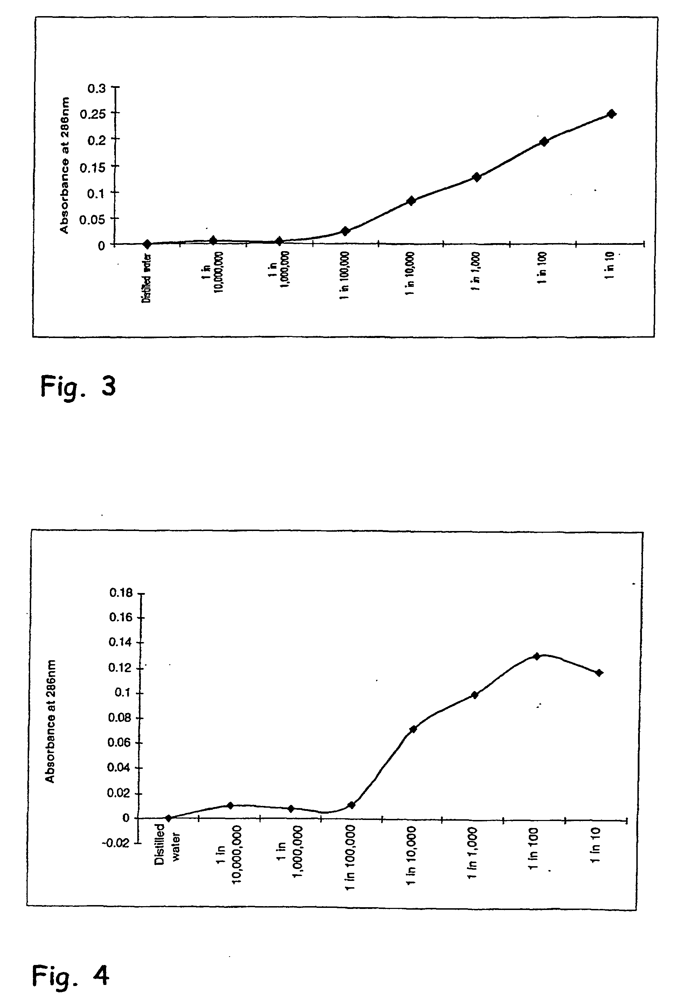

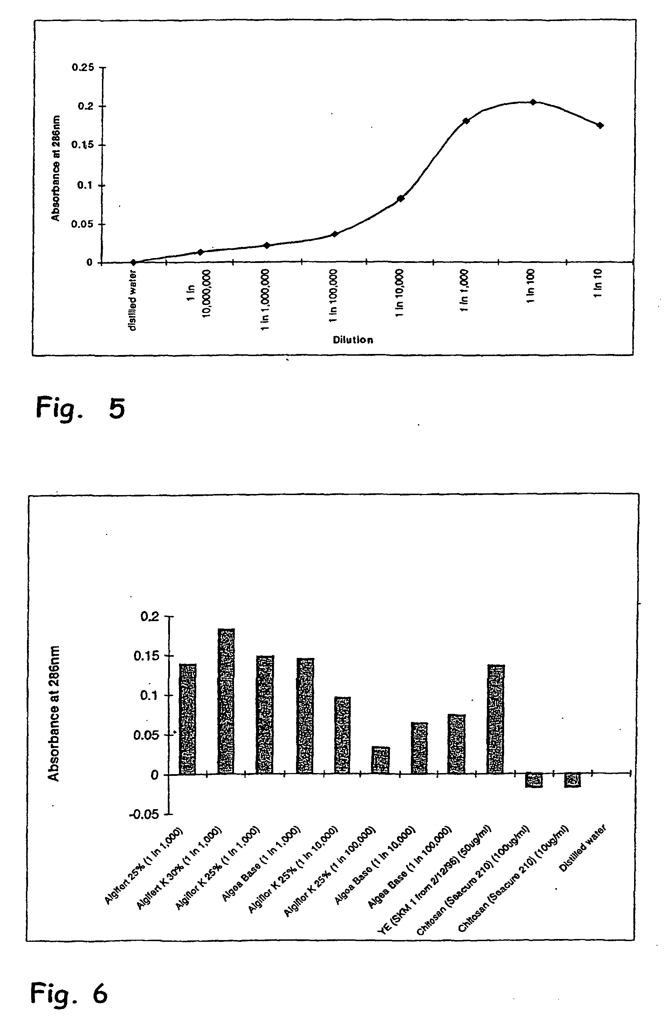

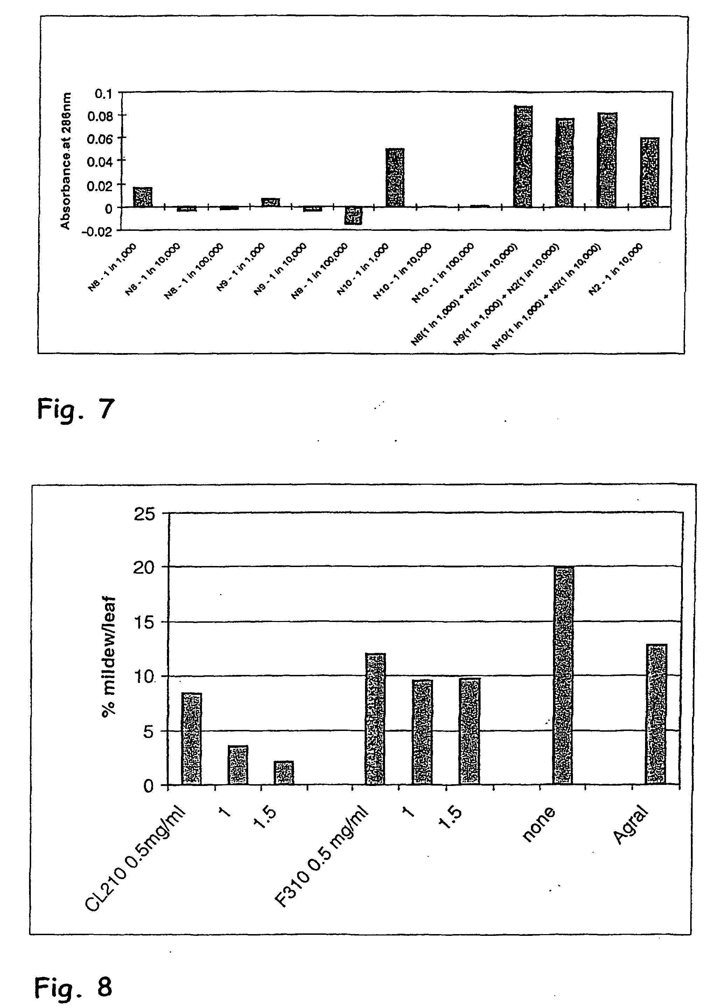

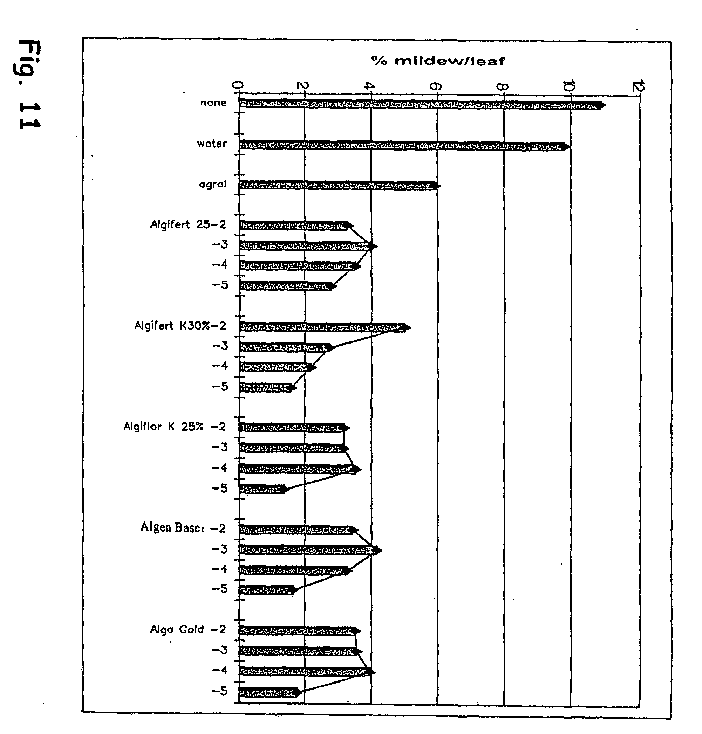

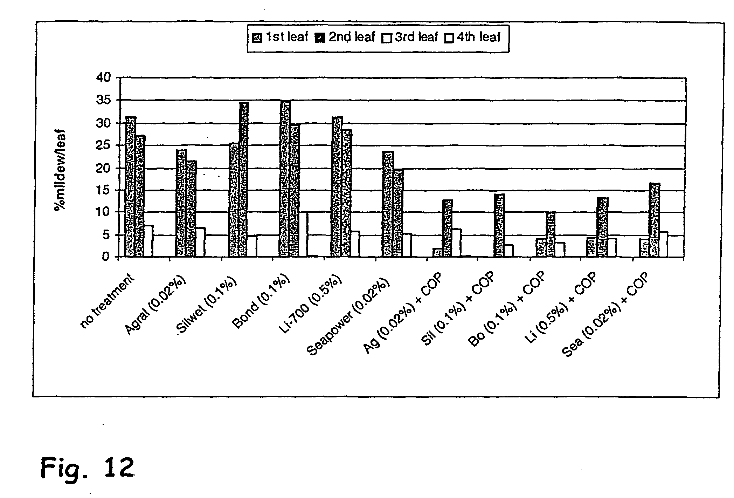

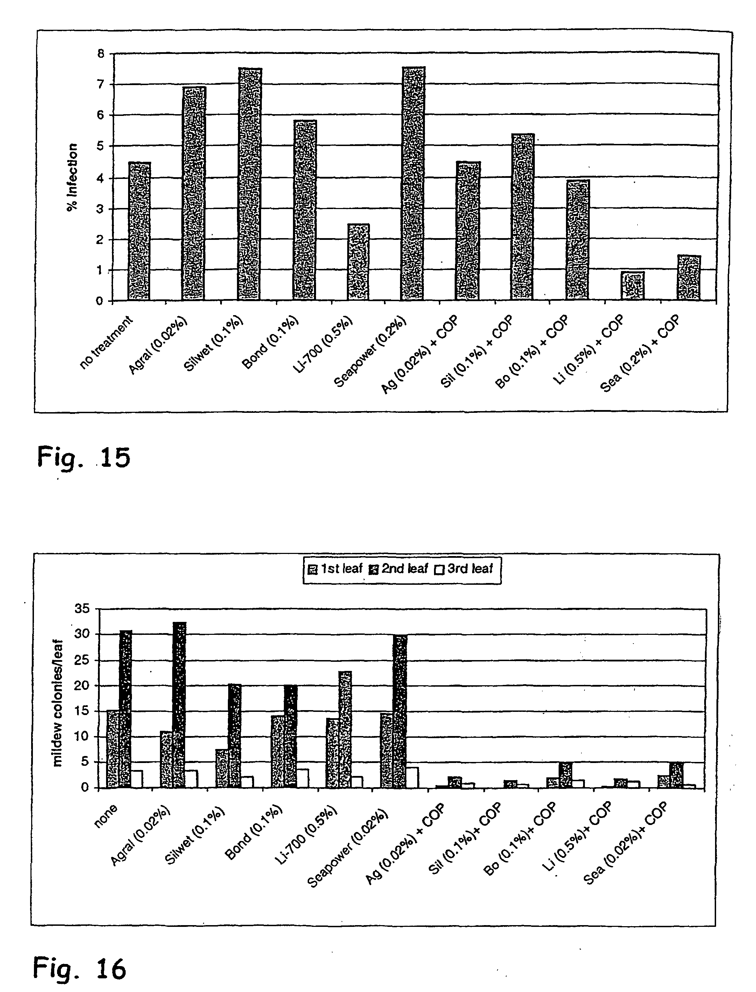

Experimental data demonstrating the effectiveness of the components (individually and in combination) is described below and in Table 1 above.
1. The ability of seaweed-derived extracts to stimulate increased synthesis of antimicrobial phytoalexins in the detached soybean elicitor assay was demonstrated in Figs. 1-5.
2. Lack of induction of soybean phytoalexins synthesis, in the detached soybean elicitor assay, was demonstrated in Fig. 6 for chitosan and for ω-3 fatty acids (Tran Maritex) in Fig. 7.
3. The ability of seaweed-derived extracts, highly acetylated chitosan (Seacure Cl 210), ω-3 fatty acids (Tran Maritex), and phosphate to control mildew on detached barley leaves was demonstrated in Figs. 8, 9, 10, 11. It causes a marked reduction (up to 99.8% on first leaves in infection of mildew (*Erysiphe graminis* f.sp. *hordei*) when sprayed onto barley plants (*Hordeum vulgare*) prior to infection as illustrated in Fig. 12.
4. The ability of seaweed-derived extracts, highly acetylated chitosan (Seacure Cl 210), and ω-3 fatty acids (Tran Maritex) to control mildew on whole plants assays of barley plants was demonstrated in Figs. 11, 13, 14.
5. The ability of seaweed-derived extracts, highly acetylated chitosan, ω-3 fatty acids and phosphate (COP) to control *Botrytis* on whole tomato plants was demonstrated in Fig. 15.
6. The ability of the COP formulation (and testing several different adjuvants) to control mildew on whole barley plants was shown in Fig. 16.
7. Individually the components show activity (to induce phytoalexins on soybean cotyledons or induce resistance to pathogen infection on detached leaves and whole plants of barley) in the range:200-1500 µg/ml for chitosan, 0.125-1% (w:v) for ω-3 fatty acids (Tran Maritex -cod liver oil triglyceride), 30-100 mM for phosphate (K₂HPO₄, KH₂PO₄) pH 6.0, 2.5- 2.5 x 10⁵ µg/ml for a seaweed-derived extract.
8. The effects of the components are complementary and can be effectively combined to give a greater level of control than any component used individually.

Support for the claimed composition and method is further presented in Figs. 1-16.

**Figure 1**. Secretion of phytoalexin elicitor activity on detached soybean cotyledons expressed as absorbance at 286 nm for a tenfold dilution series of seaweed extract (Algifert 25% dry matter) from *Ascophyllum nodosum.* The experimental observations show increased antimicrobial phytoalexin synthesis in soybean cotyledons for increased applications of the current seaweed extracts up to a maximum of 1 ml in 100 ml. For the extremely high content of the elicitor the maximum potential for phytoalexin secretion is reduced.

**Figure 2.** Secretion of phytoalexin elicitor activity on detached soybean cotyledons expressed as absorbance at 286 nm for a tenfold dilution series of seaweed extract (Algifert K 30% dry matter) from *Ascophyllum nodosum.* The experimental observations illustrating the elicitor potential to increase antimicrobial phytoalexin synthesis in soybean cotyledons for increased applications of the current seaweed extracts. Activity is increased up to a maximum of 1 ml in 100 ml. However, the too high doses of the seaweed extracts reduce the level of antimicrobial phytoalexin secretion in the same experimental system.

**Figure 3.** Secretion of phytoalexin elicitor activity on detached soybean cotyledons expressed as absorbance at 286 nm for a tenfold dilution series of seaweed extract (Algiflor K 25% dry matter) from *Ascophyllum nodosum.* The experiment shows the potential of the applied elicitor candidate Algea Base to induce synthesis of antimicrobial phytoalexins in soybean cotyledons.

**Figure 4.** Secretion of phytoalexin elicitor activity on detached soybean cotyledons expressed as absorbance at 286 nm for a tenfold dilution series of seaweed extract 'Algea Base' from *Ascophyllum nodosum.* The experiment shows the potential of the applied elicitor candidate Algea Base to induce synthesis of antimicrobial phytoalexins in soybean cotyledons.

**Figure 5**. Secretion of phytoalexin elicitor activity on detached soybean cotyledons expressed as absorbance at 286 nm for a tenfold dilution series of seaweed extract 'Hydro Plus Alga Gold' prepared from *Ascophyllum nodosum.* The experiment shows the activity of the applied elicitor candidate 'Hydro Plus Alga Gold' inducing synthesis of antimicrobial phytoalexins in soybean cotyledons.

**Figure 6**. Secretion of phytoalexin elicitor activity on detached soybean cotyledons. Induction of elicitor phytoalexin synthesis is expressed as absorbance at 286 nm for tenfold dilution series of the seaweed extract preparations 'Algifert 25%', 'Algifert K 20%', 'Algea Base', 'Algiflor K 25%', the yeast extract preparation 'YE' and the highly acetylated chitosan preparation 'Seacure CL210'.

Figure 7. Secretion of phytoalexin elicitor activity expressed as absorbance at 286 nm for different ω-3 fatty acid preparations (namely omega/fish oil (N8), Tran Maritex (N9), polyunsaturated fatty acid concentrate (N10)) and a seaweed extract preparation from *Ascophyllum nodosum* (Algifert K 30% (N2)).

**Figure 8.** Direct comparison of the efficacy of unbuffered chitosan (60% deacetylated chitosan ('Seacure CL210') and standard chitosan ('Seacure F310')) in reducing the mildew levels on detached barley leaves. The experiment was done on detached barley leaves on 0.5% water agar with benzimidazole (120 mg/l), following inoculation of pathogen (*Erysiphe graminis*) 1 day after spraying. Both chitosan preparations reduce mildew infection compared to the untreated control, however the highly acetylated preparation (Cl 210) is more active than the standard chitosan preparation (F310).

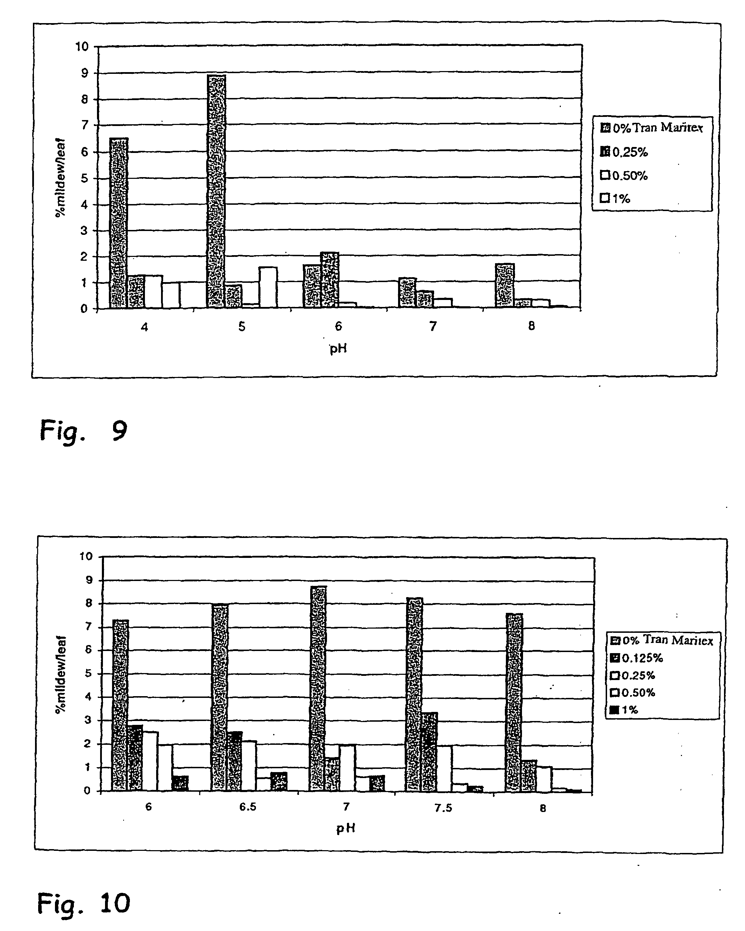

**Figure 9.** Effect of pH (4, 5; 50 mM acetate: 6-8; 50 mM phosphate) on the efficacy of ω-3 fatty acid preparation 'Tran Maritex' in reducing the mildew levels on detached barley leaves on 0.5% water agar with benzimidazole (120 mg/l), following inoculation with mildew (*Erysiphe graminis*) 1 day after spraying. In addition to the reduced infection level of mildew increasing the fatty acid preparation, phosphate and/or pH also tend to reduce infection level of the pathogen.

**Figure 10.** Effect of pH (6-8; 40 mM phosphate buffers) on the efficacy of ω-3 fatty acid preparation 'Tran Maritex' in reducing the mildew levels on detached barley leaves, on 0.5% water agar with benzimidazole (120 mg/l), following inoculation 1 day after spraying [Untreated 14.4%]. The experiment verifies the results shown in Figure 9. Phosphate itself reduces mildew levels and pathogen control is further improved by the ω-3 fatty acid preparation 'Iran Maritex'.

**Figure 11.** Effect of high molecular weight fractions of seaweed extracts 'Algifert 25', 'Algifert K30%', 'Algiflor K25%', 'Algea Base' and 'Hydro Plus Alga Gold' (all dialysed for 72 h) on mildew levels (*E. graminis* isolate 983) on detached barley leaves. The experiments were done using detached barley leaves on 0.5% water agar with benzimidazole (120 mg/l), following inoculation by the pathogen *E*. *graminis* 2 days after spraying.

**Figure 12.** Effect of a range of standard adjuvants improving surface penetration on application of COP (chitosan, ω-3 fatty acids and phosphate) to whole barley plants inoculated with mildew (*E*. *graminis*) 5 days after spray treatment. The treatments show effect on 1^{st}, 2^{nd}, 3^{rd} and 4^{th} leaf on whole barley plants compared to untreated and treatments by adjuvants alone. The effects are shown to be effective on plants treated by the COP composition 5 days prior to disease inoculated by mildew (*E*. *graminis*).

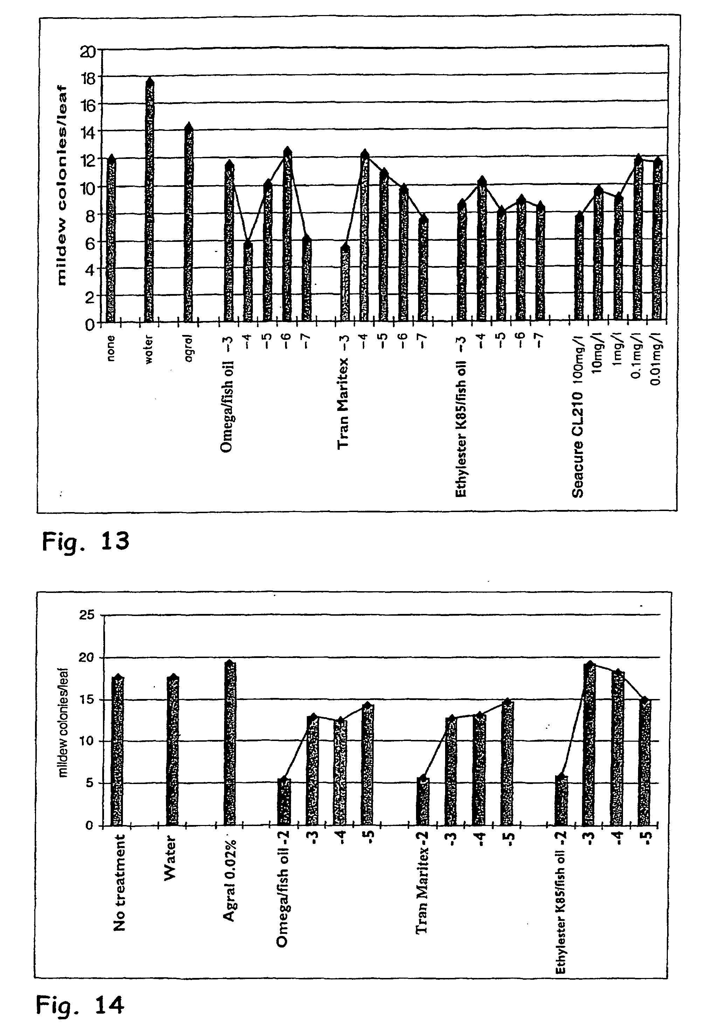

**Figure 13.** Effect of ω-3 fatty acid preparations ('omega/fish oil', 'Tran Maritex', 'ethylester K85/fish oil') and chitosan ('Seacure CL210') on mildew levels (*E. graminis* isolate 983) on detached barley leaves, on 0.5% water agar with benzimidazole (120 mg/l), following inoculation **2 days** after spraying. Numbers show dilution series of 10 (i.e. -3 equals 1 ml/liter etc).

**Figure 14.** Effect of ω-3 fatty acids ('omega/fish oil', 'Tran Maritex', 'ethylester K85/fish oil') on mildew levels (*E*. *graminis* isolate 983) following inoculation **5 days** after spraying on a whole barley plant assay. Numbers show dilution series of 10 (i.e. -3 equals 1 ml/liter etc). The best effects were observed for the highest treatment levels for which the barley plants have kept their resistance levels after 5 days when challenged by inoculating with mildew.

**Figure 15.** Effect of a range of adjuvants in application of COP (chitosan, ω-3 fatty acids and phosphate) to tomato plants inoculated with *B. cinerea* 1 day after spray treatment. The illustrated experiments show that COP is reducing *Botrytis cinerea* infection on tomato plants. The best effects of the treatments are obtained using the adjuvants Li-700 or Seapower.

**Figure 16.** Effect of a range of surface active adjuvants alone and in combination with COP (chitosan, ω-3 fatty acids and phosphate) on whole barley plants inoculated with mildew 1 day after treatment. The experiments show the additional effects from including the right adjuvant formulation (see also Table 1).

Whilst the concept of induced resistance has been hypothesised previously, there has always been an active debate as to whether inducing resistance would be detrimental to yield, or whether spray application of resistance elicitors would be phytotoxic through inducing the accumulation of toxic plant metabolites. Indeed, Bion®, a synthetic resistance elicitor based upon a core chemical structure related to salicylic acid, has been shown to cause adverse growth effects (e.g. yellowing) when applied to adult plants such as barley and wheat. Surprisingly, the combination of resistance elicitors within 'COPS' have shown no deleterious side effects (no yellowing, no stunted growth, no necrosis) on plants tested. An essential feature of COPS is therefore that no symptoms of phytotoxicity and no direct toxic effect against other organisms have been observed.

The benefit of combining these components lies in their different modes of action. Pathogens, during the infection process, release virulence and aviruience 'factors' during the infection process. These factors are potentially recognisable by plants and owing to their different chemical structures could be classified into different groupings. Each 'group' of virulence/avirulence factors are potentially able to stimulate different signal transduction pathways within the plant. 'COPS' is acting in part to stimulate a number of such signal transduction pathways thereby maximizing the plants' potential resistance-related response to infection. This is giving a stronger, more sustainable, and broader range of pathogen control than an elicitor preparation based upon a single active ingredient. In addition, and perhaps more importantly, the multiple elicitor strategy may provide insurance against 'detrimental environmental interactions' as these are unlikely to affect all components equally.

## Claims

1. An agricultural composition,
**characterised in that**
the composition comprises a mixture of chitosan, polyunsaturated fatty acids, phosphate and seaweed-derived extract.

2. An agricultural composition according to claim 1,
**characterised in that**
5-45 weight% of the N-glucosamine groups of chitosan are acetylated.

3. An agricultural composition according to claim 1,
**characterised in that**
the chitosan concentration is 0.01-0.05 weight%.

4. An agricultural composition according to claim 1,
**characterised in that**
the concentration of polyunsaturated fatty acid is 0.1-1 weight%.

5. An agricultural composition according to claim 1,
**characterised in that**
the concentration of seaweed extracts is 0- 0.1 weight %.

6. An agricultural composition according to claim 1,
**characterised in that**
the phosphate concentration is between 10 and 100 mM.

7. An agricultural composition according to claim 1,
**characterised in that**
the polyunsaturated fatty acid is triglycerides or monoesters of fatty acids from marine oils or from plant derived oils.

8. An agricultural composition according to claim 1,
**characterised in that**
the seaweed extracts are made from *Ascophyllum nodosum.*

9. A method for protecting, enhancing the resistance of plants to infections by plant pathogens and increasing abiotic stress tolerance against cold, salinity and drought,
**characterised in that**
the plants are treated with the composition according to claim 1.

10. Method according to claim 9,
**characterised in that**
the treatment is performed by spraying said composition on to the leaves of plants.

11. Method according to claim 9,
**characterised in that**
the treatment is performed by application to roots.

12. Method according to claim 9,
**characterised in that**
said composition is applied via fertigation systems.

13. Method according to claim 9,
**characterised in that**
said composition is applied by coating of seeds.

## Patentansprüche

1. Landwirtschaftliche Zusammensetzung
**dadurch gekennzeichnet dass**
die Zusammensetzung eine Mischung aus Chitosan, mehrfach ungesättigten Fettsäuren, Phosphat und aus Meeresalgen stammenden Extrakt umfasst.

2. Landwirtschaftliche Zusammensetzung nach Anspruch 1
**dadurch gekennzeichnet dass**
5-45 Gew.-% der N-Glucosammin Gruppen des Chitosans azetyliert sind.

3. Landwirtschaftliche Zusammensetzung nach Anspruch 1
**dadurch gekennzeichnet dass**
die Konzentration des Chitosans 0.01-0.05 Gew.-% beträgt.

4. Landwirtschaftliche Zusammensetzung nach Anspruch 1
**dadurch gekennzeichnet dass**
die Konzentration der mehrfach ungesättigten Fettsäure 0.1-1 Gew.-% beträgt.

5. Landwirtschaftliche Zusammensetzung nach Anspruch 1
**dadurch gekennzeichnet dass**
die Konzentration der Meeresalgen Extrakte 0-0.1 Gew.-% beträgt.

6. Landwirtschaftliche Zusammensetzung nach Anspruch 1
**dadurch gekennzeichnet dass**
die Phosphatkonzentration zwischen 10 und 100 mM beträgt.

7. Landwirtschaftliche Zusammensetzung nach Anspruch 1
**dadurch gekennzeichnet dass**
die mehrfach ungesättigte Fettsäure, Fettsäuren Triglyceride oder Fettsäuren Monoester von Meeresölen oder Pflanzenölen ist.

8. Landwirtschaftliche Zusammensetzung nach Anspruch 1
**dadurch gekennzeichnet dass**
die Meeresalgen Extrakte aus *Ascophyllum nodosum* hergestellt sind.

9. Verfahren zum Schützen, zum Fördern der Resistenz von Pflanzen gegenüber infektiösen Erkrankungen durch Pflanzenpathogene und zum Steigern der abiotischen Stresstoleranz gegen Kälte, Salzgehalt und Trockenheit,
**dadurch gekennzeichnet dass**
die Pflanzen mit der Zusammensetzung gemäß Anspruch 1 behandelt werden.

10. Verfahren nach Anspruch 9,
**dadurch gekennzeichnet dass**
die Behandlung durch Versprühen der Zusammensetzung auf die Blätter der Pflanzen ausgeführt wird.

11. Verfahren nach Anspruch 9
**dadurch gekennzeichnet dass**
die Behandlung durch Auftragen auf die Wurzeln durchgeführt wird.

12. Verfahren nach Anspruch 9,
**dadurch gekennzeichnet dass**
die Zusammensetzung über Düngesysteme aufgetragen wird.

13. Verfahren nach Anspruch 9,
**dadurch gekennzeichnet dass**
die Zusammensetzung durch Beschichtung des Saatgutes aufgetragen wird.

## Revendications

1. Composition agricole, **caractérisée en ce que** la composition comprend un mélange de chitosan, d'acides gras polyinsaturés, de phosphate et d'extrait d'algues.

2. Composition agricole selon la revendication 1, **caractérisée en ce que** 5 à 45 % en poids des groupes N-glucosamine du chitosan sont acétylés.

3. Composition agricole selon la revendication 1, **caractérisée en ce que** la concentration en chitosan est de 0,01 à 0,05 % en poids.

4. Composition agricole selon la revendication 1, **caractérisée en ce que** la concentration en acides gras polyinsaturés est de 0,1 à 1 % en poids.

5. Composition agricole selon la revendication 1, **caractérisée en ce que** la concentration en extraits d'algues est de 0 à 0,1 % en poids.

6. Composition agricole selon la revendication 1, **caractérisée en ce que** la concentration en phosphate est comprise entre 10 et 100 mM.

7. Composition agricole selon la revendication 1, **caractérisée en ce que** les acides gras polyinsaturés sont des triglycérides ou des monoesters d'acides gras provenant d'huiles marines ou d'huiles dérivées de végétaux.

8. Composition agricole selon la revendication 1, **caractérisée en ce que** les extraits d'algues sont fabriqués à partir de *Aspercophyllum nodosum*.

9. Procédé de protection, d'amélioration de la résistance de végétaux à des infections par des agents pathogènes de végétaux et d'augmentation de la tolérance de tension abiotique vis-à-vis du froid, de la salinité et la sécheresse, **caractérisé en ce que** les végétaux sont traités avec la composition selon la revendication 1.

10. Procédé selon la revendication 9, **caractérisé en ce que** le traitement est réalisé par pulvérisation de ladite composition sur les feuilles des végétaux.

11. Procédé selon la revendication 9, **caractérisé en ce que** le traitement est réalisé par application sur les racines.

12. Procédé selon la revendication 9, **caractérisé en ce que** ladite composition est appliquée par l'intermédiaire de systèmes de fertilisation.

13. Procédé selon la revendication 9, **caractérisé en ce que** ladite composition est appliquée par enduction des graines.
